# EUROPÄISCHE PATENTANMELDUNG

(11) **EP 2 366 488 A1**
(43) Veröffentlichungstag der Anmeldung: **21.09.2011**
(21) Anmeldenummer: 10002967.7
(22) Anmeldetag: 19.03.2010
(51) Int. Cl.: B23P 6/00, F01D 5/00

(54) **Verfahren zum Wiederaufarbeiten einer Turbinenschaufel mit wenigstens einer Plattform**

(71) Anmelder: SIEMENS AKTIENGESELLSCHAFT, 80333 München (DE)
(72) Erfinder: Grohnert, Martin, 16552 Schildow (DE); Oppert, Andreas, Dr., 14612 Falkensee (DE); Reich, Gerhard, 10717 Berlin (DE); Wilkenhöner, Rolf, Dr., 14532 Kleinmachnow (DE)

(57) **Zusammenfassung**

Es wird ein Verfahren zum Wiederaufarbeiten einer Turbinenschaufel mit wenigstens einer Plattform (7), welche aufgrund Korrosionsangriffs an wenigstens einer Plattformseitenfläche (9, 11) Untermaß aufweist, zur Verfügung gestellt. In dem Verfahren wird das Sollmaß der Plattform (7) wieder hergestellt, indem ein Materialauftrag auf die wenigstens eine Plattformseitenfläche (9, 11) derart erfolgt, dass nach dem Materialauftrag (12) ein Übermaß der Plattform (7) vorliegt und anschließend die Plattform (7) durch abtragendes Bearbeiten der wenigstens einen Plattformseitenfläche (9, 11) auf Sollmaß gebracht wird. Der Materialauftrag (12) erfolgt mit dem Material einer Haftvermittlerschicht.

## Beschreibung

Die vorliegende Erfindung betrifft ein Verfahren zum Wiederaufarbeiten einer Turbinenschaufel mit wenigstens einer Plattform, wobei die Turbinenschaufel insbesondere als Gasturbinenschaufel ausgebildet sein kann.

In einer Gasturbine wird ein flüssiger oder gasförmiger Brennstoff in einer Brennkammer verbrannt und die bei der Verbrennung entstehenden heißen unter hohem Druck stehenden Gase der Turbine zugeleitet, wo sie unter Entspannung und Abkühlung Impuls auf die Laufschaufeln einer Turbine übertragen. Mittels Leitschaufeln wird dabei die Impulsübertragung auf die Laufschaufeln optimiert.

Da die heißen Verbrennungsgase stark oxidierend und korrodierend sind, werden die Turbinenschaufeln, insbesondere die der von besonders heißen Verbrennungsgasen umströmten ersten Turbinenschaufelreihen, aus hochtemperaturfesten Superlegierungen hergestellt und zudem mit einem Wärmedämmbeschichtungssystem beschichtet, um die Resistenz der Schaufeln gegen die oxidierenden und korrodierenden Bedingungen im Heißgas weiter zu erhöhen. Eine solche Beschichtung umfasst typischerweise eine keramische Wärmedämmschicht, die mittels einer Haftvermittlerschicht an das Superlegierungsmaterial der Schaufel angebunden ist. Typische Haftvermittlerschichten sind sogenannte MCrAlX-Schichten, in denen M für Eisen (Fe), Kobalt (Co), Nickel (Ni) oder eine Kombination aus diesen Metallen steht. X repräsentiert ein Aktivelement und steht für Yttrium (Y) und/oder Silizium (Si) und/oder zumindest ein Element der seltenen Erden oder Hafnium (Hf). Solche Legierungen sind beispielsweise aus EP 0 486 489 B1, EP 0 786 017 B1, EP 0 412 397 B1 oder EP 1 306 454 A1 bekannt.

Trotz ihrer hohen Resistenz gegen den Heißgasangriff findet durch die Betriebsbeanspruchung und daraus resultierend durch die Hochtemperaturoxidation eine Korrosion an den Schaufeln statt. Hiervon sind auch die Schaufelplattformen betroffen. Turbinenschaufeln werden daher nach einer bestimmten Betriebsdauer einem Wiederaufarbeitungsprozess unterzogen, in dem die Beschichtung abgezogen wird, durch Korrosion beschädigte Stellen repariert werden und die Schaufeln anschließend neu beschichtet werden, um sie für einen neuen Einsatz in einer Gasturbine vorzubereiten.

Insbesondere bei den von den heißesten Verbrennungsgasen durchströmten Turbinenstufen, typischerweise bei den ersten beiden Stufen, kann der Korrosionsangriff jedoch zu einem Untermaß an den Plattformseitenflächen führen.

In EP 1 808 266 A2 wird vorgeschlagen, korrosionsgeschädigte Plattformbereiche im Bereich der Abströmkante der Turbinenschaufel zu entfernen und den entfernten Bereich anschließend durch Auftragsschweißen und anschließendes Schleifen auf Maß wiederaufzubauen. Zwar können auf diese Weise grundsätzlich auch die Untermaß aufweisende Seitenflächen von Plattformen wieder aufgebaut werden, jedoch ist das Auftragsschweißen auf Superlegierungsmaterialien schwierig. Insbesondere können aufgrund des Wärmeeintrags unerwünschte Struktureigenschaften im Superlegierungsmaterial entstehen, welche das Material schwächen.

Aufgabe der vorliegenden Erfindung ist es daher, ein vorteilhaftes Verfahren zum Wiederaufarbeiten einer Turbinenschaufel mit wenigstens einer Plattform zur Verfügung zu stellen. Diese Aufgabe wird durch ein Verfahren zum Wiederaufarbeiten einer Turbinenschaufel nach Anspruch 1 gelöst. Die abhängigen Ansprüche enthalten vorteilhafte Ausgestaltungen der Erfindung.

Im erfindungsgemäßen Verfahren zum Wiederaufarbeiten einer Turbinenschaufel mit wenigstens einer Plattform, welche aufgrund von Korrosionsangriff an wenigstens einer Plattformseitenfläche Untermaß aufweist, wird das Sollmaß der Plattform wieder hergestellt, indem ein Materialauftrag auf die wenigstens eine Plattformseitenfläche derart erfolgt, dass nach dem Materialauftrag ein Übermaß der Plattform vorliegt und anschließend die Plattform durch abtragendes Bearbeiten der wenigstens einen Plattformseitenfläche auf Sollmaß gebracht wird. Erfindungsgemäß erfolgt der Materialauftrag mit dem Material einer Haftvermittlerschicht. Dieses Material kann insbesondere ein MCrAlX-Material sein.

Die Erfindung weist gegenüber dem Auftragsschweißen den Vorteil auf, dass das Aufbringen eines Haftvermittlermaterials, insbesondere von MCrAlX-Materials keinen so hohen Wärmeeintrag in das Superlegierungsmaterial mit sich bringt, wie dies beispielsweise bei einem Auftragsschweißen der Fall wäre. Das Gefüge des Superlegierungsmaterials wird daher beim Aufbauen der Seitenfläche mittels des Haftvermittlermaterials weniger gestört als beim Auftragen mittels Auftragsschweißens. Außerdem kann der Materialauftrag in den Prozess des Wiederbeschichtens der Turbinenschaufel integriert werden, da auch beim Wiederauftragen eines Wärmedämmbeschichtungssystems eine Haftvermittlerschicht aufgetragen wird. Das erfindungsgemäße Verfahren ermöglicht daher in kostengünstiger und materialschonender Weise das Wiederherstellen des Sollmaßes von Plattformseitenflächen bei betriebsbeanspruchten Turbinenschaufeln, wodurch sich der Ausschussanteil an betriebbeanspruchten Turbinenschaufeln verringern lässt.

Der Materialauftrag kann im Rahmen des erfindungsgemäßen Verfahrens insbesondere mittels eines wiederholten Aufbringens von Haftvermittlermaterial erfolgen. Je Wiederholung des Aufbringens von Haftvermittlermaterial kann hierbei insbesondere ein Mindestmaterialauftrag von mindestens 10µm, vorzugsweise mindestens 30µm erfolgen.

Zur besseren Anbindung des Haftvermittlermaterials an das Superlegierungsmaterial kann nach dem Aufbringen des Haftvermittlermaterials eine Anbindungswärmebehandlung stattfinden.

Im Rahmen des erfindungsgemäßen Verfahrens kann der Materialauftrag und das abtragende Bearbeiten insbesondere auch an zwei entgegengesetzt gelegenen Plattformflächen einer Schaufelplattform erfolgen. Häufig treten nämlich an korrosionsbedingte Untermaße an zwei entgegengesetzt gelegenen Seiten von Schaufelplattformen gleichzeitig auf.

Typischerweise weist die Turbinenschaufel eine Mittelachse auf. Es ist daher vorteilhaft, wenn das abtragende Bearbeiten der Plattformseitenflächen, um die Plattform nach dem Auftragen von Material wieder auf Sollmaß zu bringen, bezogen auf die Mittelachse erfolgt. Auf diese Weise kann sichergestellt werden, dass nicht nur die Plattformbreite wieder auf Sollmaß gebracht wird, sondern auch der Abstand der Plattformseitenflächen vom Schaufelblatt der Turbine. Hierzu kann beispielsweise die aktuelle Abmessung der Plattform durch Abtasten von wenigstens fünf Messpunkten an den entgegengesetzten Plattformseitenflächen erfasst werden. Aus der aktuellen Abmessung wird dann der notwendige Materialabtrag beim abtragenden Bearbeiten ermittelt. Die beiden entgegengesetzten Plattformflächen können hierbei insbesondere die in Bezug auf ein Schaufelblatt mit einer Druckseite und einer Saugseite druckseitig bzw. saugseitig gelegenen Plattformseitenflächen sein. Diese Seitenflächen sind im Betrieb einer Gasturbine typischerweise der Heißgasoxidation und der daraus resultierenden Korrosion stärker ausgesetzt, als die anströmseitig und abströmseitig gelegenen Plattformseitenflächen.

Das abtragende Bearbeiten kann im Rahmen des erfindungsgemäßen Verfahrens insbesondere durch ein Flächenschleifen realisiert sein.

Wenn das Aufbringen des Haftvermittlermaterials im Rahmen eines Erneuerns eines Wärmedämmbeschichtungssystems der Turbinenschaufel erfolgt, kann das Verfahren vor dem Erneuern des Wärmedämmbeschichtungssystems ein Entschichten der Turbineschaufel umfassen. Zudem kann nach dem Entschichten und vor dem Erneuern des Wärmedämmbeschichtungssystems ein Aktivierungsstrahlen erfolgen. Das Aktivierungsstrahlen würde dann insbesondere auch die Plattformseitenflächen, auf die der Materialauftrag erfolgen soll, umfassen. In einem solchen Aktivierungsstrahl wird die Oberflächen mittels eines Strahlmittels, beispielsweise mittels Aluminiumoxids (Al₂O₃), bestrahlt, wodurch eine Aufrauung der Oberfläche erfolgt, welche die Haftung des aufzutragenden Haftvermittlermaterials verbessert.

Zum Aufbringen des Haftvermittlermaterials kann ein thermisches Spritzverfahren, etwa Plasmaspritzen, Flammspritzen, etc., zur Anwendung kommen. Derartige Verfahren sind als mögliche Verfahren zum Aufbringen von Haftvermittlerschichten bekannt und daher auch im Rahmen des Materialauftrages auf Plattseitenflächen mit Untermaß gut beherrschbar einzusetzen.

Weitere Merkmale, Vorteile und Eigenschaften der vorliegenden Erfindung ergeben sich aus der nachfolgenden Beschreibung von Ausführungsbeispielen unter Bezugnahme auf die beiliegenden Figuren.
- Figur 1: zeigt eine schematische Darstellung einer Gasturbine in einem Längsteilschnitt.
- Figur 2: zeigt ein Beispiel für eine Brennkammer einer Gasturbine in einer teilsweise geschnittenen, perspektivischen Darstellung.
- Figur 3: zeigt ein Beispiel für eine Turbinenschaufel in einer perspektivischen Darstellung.
- Figur 4: zeigt in einer schematischen Draufsicht eine Turbinenschaufel mit korrosionsbedingtem Untermaß an Seitenflächen der Plattform.
- Figur 5: zeigt die Turbinenschaufel aus Figur 4 während des Auftragens von Haftvermittlermaterial.
- Figur 6: zeigt die Turbinenschaufel aus Figur 4 während des Schleifens des aufgebrachten Haftvermittlermaterials auf Sollmaß.

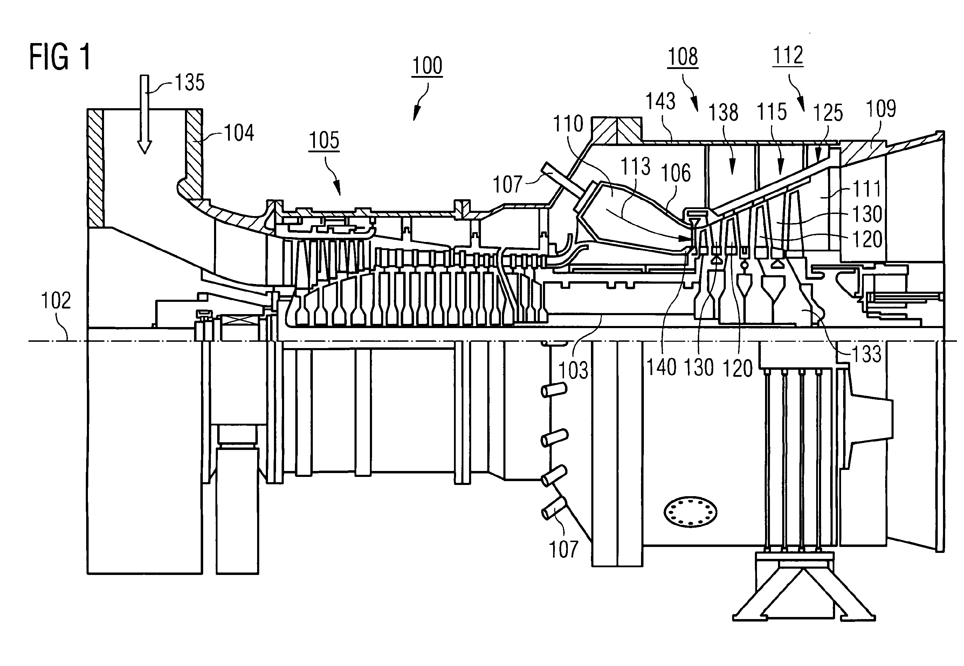

Die Figur 1 zeigt beispielhaft eine Gasturbine 100 in einem Längsteilschnitt.

Die Gasturbine 100 weist im Inneren einen um eine Rotationsachse 102 drehgelagerten Rotor 103 mit einer Welle 101 auf, der auch als Turbinenläufer bezeichnet wird.
Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.
Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.
Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.
Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.
An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.

Um den dort herrschenden Temperaturen standzuhalten, können diese mittels eines Kühlmittels gekühlt werden.

Ebenso können Substrate der Bauteile eine gerichtete Struktur aufweisen, d.h. sie sind einkristallin (SX-Struktur) oder weisen nur längsgerichtete Körner auf (DS-Struktur).

Als Material für die Bauteile, insbesondere für die Turbinenschaufel 120, 130 und Bauteile der Brennkammer 110 werden beispielsweise eisen-, nickel- oder kobaltbasierte Superlegierungen verwendet.
Solche Superlegierungen sind beispielsweise aus der EP 1 204 776 B1, EP 1 306 454, EP 1 319 729 A1, WO 99/67435 oder WO 00/44949 bekannt.

Ebenso können die Schaufeln 120, 130 Beschichtungen gegen Korrosion (MCrAlX; M ist zumindest ein Element der Gruppe Eisen (Fe), Kobalt (Co), Nickel (Ni), X ist ein Aktivelement und steht für Yttrium (Y) und/oder Silizium, Scandium (Sc) und/oder zumindest ein Element der Seltenen Erden bzw. Hafnium). Solche Legierungen sind bekannt aus der EP 0 486 489 B1, EP 0 786 017 B1, EP 0 412 397 B1 oder EP 1 306 454 A1.

Auf der MCrAlX kann noch eine Wärmedämmschicht vorhanden sein, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.

Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

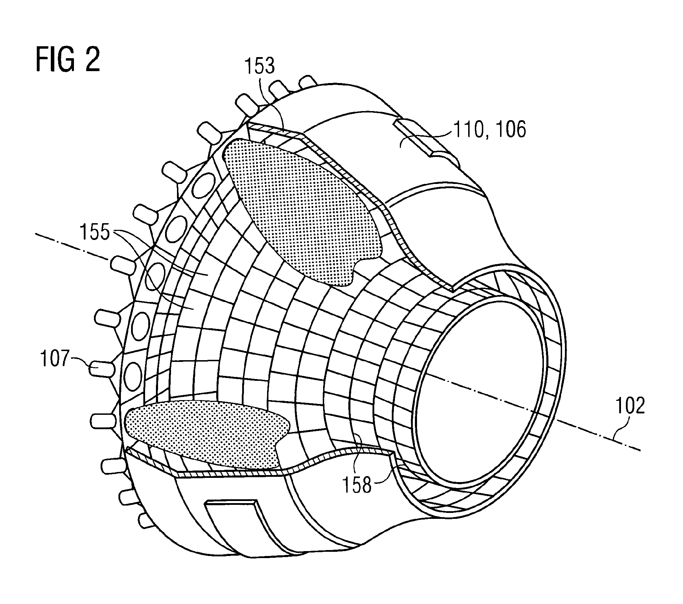

Die Figur 2 zeigt eine Brennkammer 110 einer Gasturbine.
Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.

Jedes Hitzeschildelement 155 aus einer Legierung ist arbeitsmediumsseitig mit einer besonders hitzebeständigen Schutzschicht (MCrAlX-Schicht und/oder keramische Beschichtung) ausgestattet oder ist aus hochtemperaturbeständigem Material (massive keramische Steine) gefertigt.
Diese Schutzschichten können ähnlich der Turbinenschaufeln sein, also bedeutet beispielsweise MCrAlX: M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1.

Auf der MCrAlX kann noch eine beispielsweise keramische Wärmedämmschicht vorhanden sein und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.

Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen.

Wiederaufarbeitung (Refurbishment) bedeutet, dass Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in dem Hitzeschildelement 155 repariert. Danach erfolgt eine Wiederbeschichtung der Hitzeschildelemente 155 und ein erneuter Einsatz der Hitzeschildelemente 155.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Kühllöcher (nicht dargestellt) auf.

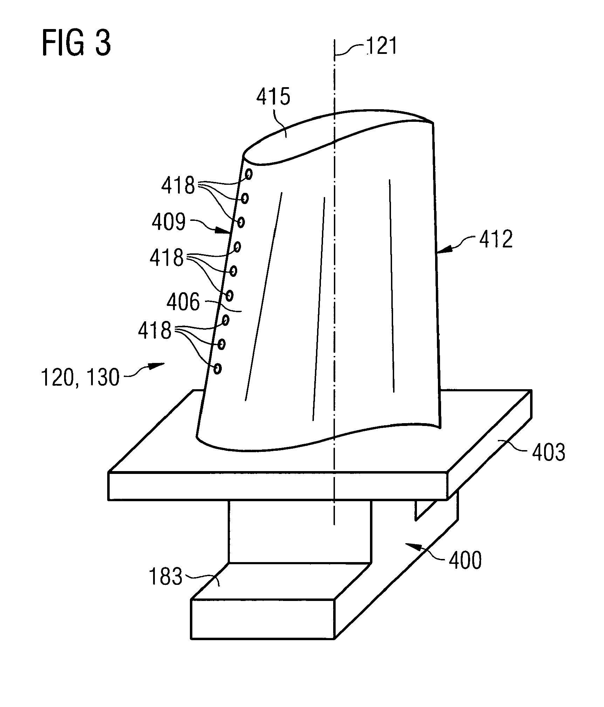

Die Figur 3 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.
Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).

Der Schaufelfuß 183 ist beispielsweise als Hammerkopf ausgestaltet. Andere Ausgestaltungen als Tannenbaum- oder Schwalbenschwanzfuß sind möglich.

Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.

Solche Superlegierungen sind beispielsweise aus der EP 1 204 776 B1, EP 1 306 454, EP 1 319 729 A1, WO 99/67435 oder WO 00/44949 bekannt.

Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.
Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.

Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).
Solche Verfahren sind aus der US-PS 6,024,792 und der EP 0 892 090 A1 bekannt.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1.
Die Dichte liegt vorzugsweise bei 95% der theoretischen Dichte.

Auf der MCrAlX-Schicht (als Zwischenschicht oder als äußerste Schicht) bildet sich eine schützende Aluminiumoxidschicht (TGO = thermal grown oxide layer).

Vorzugsweise weist die Schichtzusammensetzung Co-30Ni-28Cr-8Al-0,6Y-0,7Si oder Co-28Ni-24Cr-10Al-0,6Y auf. Neben diesen kobaltbasierten Schutzbeschichtungen werden auch vorzugsweise nickelbasierte Schutzschichten verwendet wie Ni-10Cr-12Al-0,6Y-3Re oder Ni-12Co-21Cr-11Al-0,4Y-2Re oder Ni-25Co-17Cr-10Al-0,4Y-1,5Re.

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Die Wärmedämmschicht bedeckt die gesamte MCrAlX-Schicht.

Durch geeignete Beschichtungsverfahren wie z.B. Elektronenstrahlverdampfen (EB-PVD) werden stängelförmige Körner in der Wärmedämmschicht erzeugt.

Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

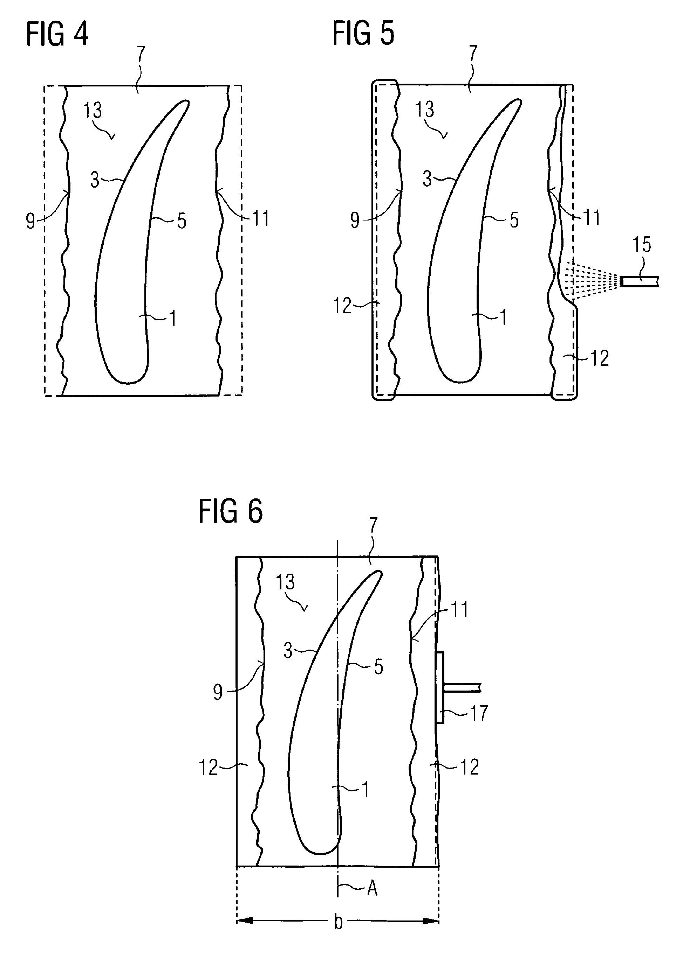

Figur 4 zeigt in schematischer Darstellung eine korrodierte Turbinenschaufel. In der Darstellung sind das Schaufelblatt 1 mit Saugseite 3 und Druckseite 5 sowie die Schaufelplattform 7 zu erkennen. Letztere weist aufgrund von Korrosionsangriffen, die aus der Betriebsbeanspruchung und der daraus resultierenden Hochtemperaturoxidation stammen, sowohl an der saugseitigen Plattformseitenfläche 9 als auch an der druckseitigen Plattformseitenfläche 11 Untermaß auf. Das Sollmaß der Plattform 7 ist in der Figur gestrichelt eingezeichnet. Es sei an dieser Stelle darauf hingewiesen, dass das korrosionsbedingte Untermaß übertrieben dargestellt ist, um die Klarheit der Zeichnungen zu erhöhen. Korrosion in anderen Bereichen der Turbinenschaufel als den Seitenflächen 9, 11 der Schaufelplattform 7 sind typischerweise auch vorhanden, in den Figuren aber nicht dargestellt, um die Zeichnungen nicht unnötig zu verkomplizieren. Die durch die beim Gasturbinenbetrieb herrschenden harschen Umgebungsbedingungen korrodierte Turbinenschaufel wird erfindungsgemäß einer Wiederaufarbeitung unterzogen, in der das Sollmaß der Schaufelplattform, insbesondere an den korrodierten Seitenflächen 9, 11 wiederhergestellt wird.

Im vorliegenden Ausführungsbeispiel ist das Wiederherstellen des Sollmaßes teilweise in die Prozedur zum Aufbringen eines neuen Wärmedämmbeschichtungssystems auf die Turbinenschaufel integriert. Hierzu wird zuerst die alte Beschichtung von der Turbinenschaufel abgezogen, beispielsweise mittels geeigneter Lösungen und/oder geeigneter Strahlprozesse, und die Schaufel danach gereinigt, um eventuelle Oxidationsreste zu beseitigen. Danach erfolgt ein Aktivierungsstrahlen, beispielsweise mittels Aluminiumoxidpartikeln (Al₂O₃, Korund), durch die eine Aufrauung der Oberfläche stattfindet. Die so vorbereitete Turbinenschaufel wird dann in eine Beschichtungsvorrichtung eingebracht, um anschließend das Schaufelblatt 1 und die dem Heißlastpfad zugewandte Fläche 13 der Schaufelplattform 7 mit dem Wärmedämmbeschichtungssystem zu beschichten. Hierbei sind die Seitenflächen der Schaufelplattform 7 im Stand der Technik üblicherweise maskiert oder abgeschattet, da diese nicht mit einem Wärmedämmbeschichtungssystem versehen werden sollen. Im Rahmen des erfindungsgemäßen Verfahrens werden jedoch die saugseitige Plattformseitenfläche 9 sowie die druckseitige Plattformseitenfläche 11 nicht maskiert, bzw. abgeschattet, sondern freigelassen. Auf diese Weise kann auf diese beiden Flächen Beschichtungsmaterial aufgebracht werden.

Beim Beschichten wird zuerst eine Haftvermittlerschicht aufgebracht, die im vorliegenden Beispiel als MCrAlX-Schicht ausgebildet ist. Das Aufbringen der Haftvermittlerschicht erfolgt mittels eines thermischen Spritzverfahrens, beispielsweise mittels Plasmaspritzens oder Flammspritzens. Außer auf das Schaufelblatt 1 und die Oberseite 13 der Schaufelblattform 7 wird das MCrAlX-Material auch auf die saugseitige Plattformseitenfläche 9 und die druckseitige Plattformseitenfläche 11 aufgebracht.

Das Spritzverfahren ist in Figur 5 durch eine schematisch dargestellte Spritzdüse 15 angedeutet. Anders als in den übrigen Bereichen werden auf die saugseitige Plattformseitenfläche 9 und die druckseitige Plattformseitenfläche 11 jedoch mehrere Lagen des MCrAlX-Materials aufgebracht, wobei jede Lage eine Mindestdicke von 10µm, vorzugsweise von 30µm, aufweist. Das lagenweise Aufbringen von MCrAlX-Material 12 auf die Plattseitenflächen 9, 11 erfolgt solange, bis das in den Figuren 4 bis 6 gestrichelte angedeutete Sollmaß der Plattform 7 überschritten ist. Dieser Zustand ist in Figur 5 für die saugseitige Plattformseitenfläche 9 dargestellt, während für die druckseitige Plattformseitenfläche 11 das lagenweise Aufspritzen des MCrAlX-Materials 12 mittels der Spritzdüse 15 dargestellt ist.

Nachdem auf beide Plattformseitenflächen 9, 11 so viele Lagen an MCrAlX-Material 12 aufgebracht worden sind, dass bei beiden das Sollmaß überschritten ist, wird eine vorzugsweise Anbindungswärmebehandlung durchgeführt, welche die Anbindung des aufgebrachten MCrAlX-Materials 12 an das Superlegierungsmaterial der Turbinenschaufel verbessert. Anschließend folgt ein Aufbringen einer Wärmedämmschicht, beispielsweise einer Zirkoniumoxidschicht (ZrO₂), die in Ihrer Struktur zumindest teilweise durch Yttriumoxid (Y₂O₃) stabilisiert ist, auf die MCrAlX-Schicht. Die Wärmedämmschicht wird insbesondere auf das Schaufelblatt 1 und die Oberfläche 13 der Plattform 7 aufgebracht. Im Rahmen der Erfindung stört es aber auch nicht, wenn die Wärmedämmschicht auch auf das an den Plattformseitenflächen 9, 11 aufgebrachte MCrAlX-Material 12 aufgebracht wird. Dies wird häufig auch nicht zu vermeiden sein, da, wie zuvor ausgeführt, eine Abdeckung oder Abschattung der Plattseitenflächen 9, 11 nicht vorgesehen ist. Das Aufbringen der Wärmedämmbeschichtung kann ebenfalls mittels eines thermischen Spritzverfahrens erfolgen. Alternativ besteht aber auch die Möglichkeit, die Wärmedämmbeschichtung durch Abscheidung aus der Gasphase zu erzeugen.

Nachdem die Wärmedämmbeschichtung auf die Turbinenschaufel aufgebracht worden ist, wird diese aus der Beschichtungsvorrichtung entnommen und in eine Vorrichtung zur maschinellen Bearbeitung eingespannt, in der im vorliegenden Ausführungsbeispiel dann mittels Schleifens ein abtragendes Bearbeiten der nun Übermaß aufweisenden saugseitigen und druckseitigen Plattformseitenflächen stattfindet. Das Einspannen erfolgt dabei so, dass die Mittelachse A der Turbinenschaufel gleich der Mittelachse der Einspannvorrichtung ist. Das Aufspannen der Turbinenschaufel zum Schleifen geschieht, damit die Turbinenschaufel bezogen auf ihre Mittenachse A im Raum frei positionierbar ist, d.h. um 360° gedreht werden kann.

Die aktuelle Breite b der Schaufelblattform 7 wird dann durch druck- und saugseitiges Antasten von mindestens 5 Messpunkten pro Plattformseitenfläche 9, 11 erfasst. In einem Computerprogramm wird dann der Materialabtrag berechnet, der nötig ist, um die durch den Auftrag von MCrAlX-Material aufweisende Schaufelplattform 7 auf Sollmaß zu bringen. Der für die saugseitige Plattformseitenfläche 9 und die druckseitige Plattformseitenfläche 11 errechnete Bearbeitungsabtrag ist dabei auf die Schaufelmittelachse A bezogen. Der ermittelte Abtrag wird sodann mittels einer Schleifvorrichtung, die in Figur 6 unter der Bezugsziffer 17 stark schematisiert dargestellt ist, durch Flächenschleifen abgearbeitet. Vor dem Nullschliff wird die Schleifscheibe abgezogen und der Abrichtbetrag wird vom Programm, bezogen auf den Scheibendurchmesser der Schleifvorrichtung, kompensiert. Nach Beendigung des Schleifvorganges weist die Breite b der Schaufelplattform 7 wieder Sollmaß auf.

Nachdem die Turbinenschaufel wieder beschichtet worden ist und die Plattformseitenflächen 7, 11 wieder auf Sollmaß gebracht worden sind, kann die Turbinenschaufel wieder in eine Gasturbine zum weiteren Betrieb eingebaut werden.

Die vorliegende Erfindung wurde zu Zwecken der Erläuterung anhand eines konkreten Ausführungsbeispiels beschrieben. Abweichungen von diesem Ausführungsbeispiel sind jedoch möglich. So ist es beispielsweise nicht unbedingt notwendig das Auftragen des Haftvermittlermaterials im Rahmen eines Prozesses zum Wiederauftragen eines Wärmedämmbeschichtungssystems auf eine Turbinenschaufel durchzuführen. Stattdessen kann das Auftragen von Haftvermittlermaterial auf die Plattformseitenflächen in einem eigenständigen Prozess erfolgen. Ebenso ist es nicht zwingend notwendig sowohl saugseitig als auch druckseitig Material auf die Plattformseitenflächen aufzubringen. Obwohl in aller Regel beide Seiten aufgrund von Korrosion Untermaß aufweisen, kann es auch vorkommen, dass lediglich eine Seite Untermaß aufweist. In diesem Fall ist ein Materialauftrag auf die Seite mit Untermaß ausreichend. Trotzdem kann es aber wünschenswert sein, auch auf die Seite, die kein erhebliches Untermaß aufweist, Material aufzubringen und dieses dann zu schleifen, um eine verbesserte Oberflächenstruktur der Plattformseitenfläche zu erreichen.

## Patentansprüche

1. Verfahren zum Wiederaufarbeiten einer Turbinenschaufel mit wenigstens einer Plattform (7),
welche aufgrund Korrosionsangriffs an wenigstens einer Plattformseitenfläche (9, 11) Untermaß aufweist,
in dem das Sollmaß der Plattform (7) wieder hergestellt wird,
indem ein Materialauftrag auf die wenigstens eine Plattformseitenfläche (9, 11) derart erfolgt, dass nach dem Materialauftrag (12) ein Übermaß der Plattform (7) vorliegt und
anschließend die Plattform (7) durch abtragendes Bearbeiten der wenigstens einen Plattformseitenfläche (9, 11) auf Sollmaß gebracht wird,
**dadurch gekennzeichnet, dass**
der Materialauftrag (12) mit dem Material einer Haftvermittlerschicht erfolgt.

2. Verfahren nach Anspruch 1,
**dadurch gekennzeichnet, dass**
beim Materialauftrag (12) mittels eines wiederholten Aufbringens von Haftvermittlermaterial erfolgt.

3. Verfahren nach Anspruch 1 oder Anspruch 2,
**dadurch gekennzeichnet, dass**
das je Wiederholung des Aufbringens von Haftvermittlermaterial ein Mindestmaterialauftrag von 10µm erfolgt.

4. Verfahren nach einem der Ansprüche 1 bis 3,
**dadurch gekennzeichnet, dass**
das Material der Haftvermittlerschicht ein MCrAlX-Material ist.

5. Verfahren nach einem der Ansprüche 1 bis 4,
**dadurch gekennzeichnet, dass**
nach dem Aufbringen von Haftvermittlermaterial eine Anbindungswärmebehandlung stattfindet.

6. Verfahren nach einem der Ansprüche 1 bis 5,
**dadurch gekennzeichnet, dass**
der Materialauftrag (12) und das abtragende Bearbeiten an zwei entgegengesetzten Plattformseitenflächen (9, 11) erfolgt.

7. Verfahren nach Anspruch 6,
**dadurch gekennzeichnet, dass**
die Turbinenschaufel eine Mittelachse (A) aufweist und das abtragende Bearbeiten der Plattformseitenflächen (9, 11) zum Bringen der Plattform (7) auf Sollmaß bezogen auf die Mittelachse (A) erfolgt.

8. Verfahren nach Anspruch 7,
**dadurch gekennzeichnet, dass**
die aktuelle Abmessung der Plattform durch Abtasten von wenigstens fünf Messpunkten an den entgegengesetzten Plattformseitenflächen (9, 11) erfasst wird und aus der aktuellen Abmessung der notwendige Materialabtrag beim abtragenden Bearbeiten ermittelt wird.

9. Verfahren nach einem der Ansprüche 6 bis 8,
**dadurch gekennzeichnet, dass**
die Turbinenschaufel ein Schaufelblatt (1) mit einer Druckseite (5) und einer Saugseite (3) aufweist und die entgegengesetzten Plattformseitenflächen (9, 11) die in Bezug auf das Schaufelblatt druckseitig und saugseitig gelegenen Plattformseitenflächen (9, 11) sind.

10. Verfahren nach einem der Ansprüche 1 bis 9,
**dadurch gekennzeichnet, dass**
das abtragende Bearbeiten durch ein Flächenschleifen realisiert ist.

11. Verfahren nach einem der Ansprüche 1 bis 10,
**dadurch gekennzeichnet, dass**
das Aufbringen des Haftvermittlermaterials im Rahmen eines Erneuerns eines Wärmedämmbeschichtungssystems der Turbinenschaufel erfolgt, welches eine Haftvermittlerschicht und eine Wärmedämmschicht umfasst.

12. Verfahren nach Anspruch 11,
**dadurch gekennzeichnet, dass**
vor dem Erneuern des Wärmedämmbeschichtungssystems ein Entschichten der Turbinenschaufel erfolgt.

13. Verfahren nach Anspruch 12,
**dadurch gekennzeichnet, dass**
nach dem Entschichten und vor dem Erneuern des Wärmedämmbeschichtungssystems ein Aktivierungsstrahl erfolgt.

14. Verfahren nach einem der Ansprüche 1 bis 13,
**dadurch gekennzeichnet, dass**
das Aufbringen des Haftvermittlermaterials mittels eines thermischen Spritzverfahrens erfolgt.
